# EUROPÄISCHE PATENTANMELDUNG

(11) **EP 2 080 874 A2**
(43) Veröffentlichungstag der Anmeldung: **22.07.2009**
(21) Anmeldenummer: 08021278.0
(22) Anmeldetag: 08.12.2008
(51) Int. Cl.: F01N 3/36, F01N 3/20

(54) **Tankentnahmesystem mit elektrischer und fluidischer Heizvorrichtung**

(30) Priorität: 18.01.2008 DE 102008005196
(71) Anmelder: DBK David + Baader GmbH, 76870 Kandel (DE)
(72) Erfinder: Wildegger, Christian, 67714 Waldfischbach-Burgalben (DE)
(74) Vertreter: Polte, Willi

(57) **Zusammenfassung**

Die Erfindung betrifft ein Tankentnahmesystem (1) für einen Fahrzeugtank (2), der mit einer gefrorenen Flüssigkeit (8) gefüllt ist. Das Tankentnahmesystem umfasst ein Heizsystem, das wenigstens ein elektrisches Heizelement (12a,12b,13,18a,18b,18c,22,48a,48b) als primäre Heizvorrichtung aufweist und ein Leitungssystem, das mit wenigstens einer Entnahmeleitung (3,19) mit einer im Fahrzeugtank (2) angeordneten Entnahmeöffnung (10a,10b) versehen ist. Das sich um die Entnahmeöffnung (10a,10b) erstreckende Kaltstartvolumen (14a,14b) der gefrorenen Flüssigkeit ist durch die primäre Heizvorrichtung abschmelzbar. Um ein Kaltstartvolumen (14a,14b) möglichst zügig und die restliche gefrorenen Flüssigkeit (8) möglichst energiesparend abzuschmelzen, ist erfindungsgemäß vorgesehen, dass das Heizsystem eine mit einem Heizfluid gespeiste sekundäre Heizvorrichtung und das Leitungssystem wenigstens eine vom Heizfluid durchströmbare, in der Flüssigkeit (8) im Fahrzeugtank angeordnete Heizleitung (6) aufweist, und dass die Heizleitung (6) mit der Entnahmeleitung (3,19) flüssigkeitsleitend verbunden und die abgeschmolzene Flüssigkeit durch die Entnahmeleitung (3,19) der Heizleitung (6) als Heizfluid zuführbar ist.

## Beschreibung

Die Erfindung betrifft ein Tankentnahmesystem für einen Fahrzeugtank, der mit einer gefrorenen Flüssigkeit gefüllt ist, mit einem Heizsystem, das wenigstens ein elektrisches Heizelement als primäre Heizvorrichtung umfasst und mit einem Leitungssystem, das wenigstens eine Entnahmeleitung mit einer im Fahrzeugtank angeordneten Entnahmeöffnung aufweist, wobei ein sich um die Entnahmeöffnung erstreckendes Kaltstartvolumen der gefrorenen Flüssigkeit durch die primäre Heizvorrichtung abschmelzbar ist.

Die Erfindung betrifft ferner ein Verfahren zur Entnahme einer gefrorenen Flüssigkeit aus einem Fahrzeugtank, bei dem die Flüssigkeit im Bereich um wenigstens eine Entnahmeöffnung abgeschmolzen und die abgeschmolzene Flüssigkeit durch die Entnahmeöffnung aus dem Fahrzeugtank geleitet wird.

Bei Flüssigkeitstanks für Fahrzeuge, welche einen Verbraucher über ein Leitungssystem mit Flüssigkeit versorgen, tritt das Problem auf, dass die Flüssigkeiten bei Außentemperaturen, die unter dem Gefrierpunkt der Flüssigkeit liegen, gefrieren. Dieses Problem ist beispielsweise von Vorratsbehältern für Reinigungslösungen für Scheiben- und Scheinwerferwaschanlagen bekannt. So gefriert im Winter die Reinigungslösung bei tiefen Temperaturen, so dass kurz nach einem Kaltstart des Fahrzeuges keine flüssige Reinigungslösung für die Waschanlage zur Verfügung steht. Auch die Zugabe von Frostschutzmittel kann den Gefrierpunkt der Reinigungslösung nur begrenzt absenken, z.B. auf etwa -20°C, so dass die Flüssigkeit trotz des Frostschutzmittels bei Temperaturen von unter -20°C im Tank und in den Leitungen der Waschanlage gefriert.

Um die Stickoxid-Emissionen in den Abgasen von Verbrennungskraftmaschinen, insbesondere von Dieselmotoren, zu senken, kann eine Abgasreinigung nach dem SCR-Verfahren ("Selective Catalytic Reduction") durchgeführt werden. Hierbei wird den Abgasen der Verbrennungsmotoren als Reduktionsmittel eine wässrige Harnstofflösung zugeführt. Die wässrige Harnstofflösung mit beispielsweise einem Harnstoffgehalt von 32,5 Gew.-% gefriert bei einer Temperatur von unter -11°C.

Um das Gefrieren der gespeicherten Flüssigkeiten zu verhindern, werden die Vorratsbehälter für die Reinigungslösung von Waschanlagen oder für Harnstofflösung mit Heizsystemen ausgestattet, welche die gefrorenen Flüssigkeiten in den Vorratsbehältern abschmelzen.

Diese Heizsysteme werden herkömmlicherweise in die Entnahmeeinheit integriert und schmelzen bei einem Kaltstart des Fahrzeuges zumindest ein um die Entnahmeöffnung im Tank liegendes Kaltstartvolumen der zu entnehmenden Flüssigkeit ab.

Ein Heizsystem für die Verwendung in Treibstofftanks, um insbesondere in Dieseltanks das Ausfällen des Treibstoffs bei niedrigen Temperaturen zu vermeiden, ist beispielsweise aus der US 4,656,979 bekannt. Das dort beschriebene Heizsystem weist ein Leitungssystem auf, durch das beispielsweise die Kühlflüssigkeit des Verbrennungsmotors geleitet wird, durch dessen mitgeführte Wärme der Treibstoff aufgeheizt wird. Das Leitungssystem umfasst zwei sich entlang der Tankentnahmeleitung erstreckende Leitungen, an die sich ein Leitungsabschnitt rechtwinkelig anschließt, der parallel zur Außenwand des Tanks verläuft.

Ein beheizbarer Flüssigkeitsbehälter für ein Kraftfahrzeug, dessen Heizeinrichtung durch eine elektrische Energiequelle gespeist wird, wird in der WO 03/093080 A1 beschrieben. Als elektrische Energiequelle dient beispielsweise die Starterbatterie des Fahrzeugs. Die Heizeinrichtung ist beispielsweise als Dickschichtheizung mit einem Widerstandselement ausgebildet oder als wendelförmig ausgebildeter, elektrischer Heizdraht.

Ein beheiztes Tankentnahmesystem ist aus der EP 1 582 732 B1 bekannt. Dieses weist einen Tauchkörper auf, der mit einer Entnahmeleitung und einem Wärmetauscher versehen ist. Die beispielsweise mit erwärmtem Kühlmittel durchströmten Leitungen des Wärmetauschers verlaufen entlang der Entnahmeleitung und erstrecken sich in einen Wärmetauscherfortsatz, der sich vom Tauchkörper weg in das Tankinnere erstreckt. Das Tankentnahmesystem kann eine zusätzliche Elektroheizung aufweisen, die bei noch kaltem Kühlmittel die Entnahmeleitung zusätzlich heizt.

Eine in der DE 10 2006 027 487 A1 beschriebene Vorrichtung nutzt den Konvektionseffekt, indem ein mit Heizelementen versehener, flächiger Aluminiumkörper, der mit randständigen Konvektionsbohrungen versehen ist, in Bodennähe des Tanks angeordnet wird. Um die Konvektionsbohrungen herum entsteht eine Konvektionsströmung, wodurch die Wärme im bereits aufgetauten Medium kontinuierlich nach oben transportiert wird. Weiter oben kühlt das Medium ab und sinkt wieder nach unten zur Heizung.

Der Nachteil der herkömmlicherweise verwendeten Tankentnahmesysteme liegt darin, dass verhältnismäßig viel Energie benötigt wird, um ein für den Betrieb des SCR-Katalysators angemessenes Tankvolumen aufzuschmelzen. Die Wärmeenergie wird nur über eine begrenzte Fläche an die Flüssigkeit übertragen. Um weiter von dem Heizkörper entfernte Bereiche des Tanks aufzuschmelzen, muss das in der Nähe des Heizkörpers befindliche Reduktionsmittel bis auf eine Temperatur deutlich über seinem Gefrierpunkt erwärmt werden. Nur so kann eine Konvektionsströmung bzw. eine Wärmeleitung durch das Eis in entlegenere Bereiche des Tanks erreicht und das gefrorene Reduktionsmittel in angemessener Zeit aufgeschmolzen werden.

Für das vollständige Aufschmelzen des Tankinhalts ist also ein hoher Temperaturgradient notwendig, wodurch das Reduktionsmittel insgesamt stärker als notwendig erwärmt wird. Trotzdem darf die Temperatur des Heizkörpers nicht beliebig hoch sein, da bei Übersteigen des Siedepunkts der zu schmelzenden Flüssigkeit beziehungsweise der Komponente der Flüssigkeit mit dem niedrigsten Siedepunkt in der Nähe des Heizkörpers Dampf entsteht. Die entstehenden Dampfblasen wirken thermisch isolierend und verringern den Wirkungsgrad der Heizvorrichtung. Zudem führen bei der Erwärmung von wässrigen Harnstomösungen Temperaturen von über 60°C zu einer Zersetzung des Harnstoffes, so dass diese Temperatur an den wärmeübertragenden Flächen nicht überschritten werden darf.

Erschwerend kommt hinzu, dass die Abschmelzung unmittelbar an der Heizoberfläche beginnt, so dass nach dem Ablaufen der Schmelzflüssigkeit eine Luftschicht um den Heizkörper entstehen kann. Auch diese Luftschicht wirkt thermisch isolierend und kann damit den Wirkungsgrad der Heizvorrichtung drastisch verringern.

Folglich liegt der Erfindung die Aufgabe zugrunde, eine Vorrichtung bereitzustellen, die ein Kaltstartvolumen in einem Fahrzeugtank möglichst zügig und die restliche gefrorenen Flüssigkeit möglichst energiesparend abschmilzt.

Diese Aufgabe wird erfindungsgemäß für ein Tankentnahmesystem der eingangs genannten Art dadurch gelöst, dass das Heizsystem eine mit einem Heizfluid gespeiste sekundäre Heizvorrichtung und das Leitungssystem wenigstens eine vom Heizfluid durchströmbare, in der Flüssigkeit im Fahrzeugtank angeordnete Heizleitung aufweist, und dass die Heizleitung mit der Entnahmeleitung flüssigkeitsleitend verbunden und die abgeschmolzene Flüssigkeit durch die Entnahmeleitung der Heizleitung als Heizfluid zuführbar ist.

Die Aufgabe für das eingangs genannte Verfahren wird erfindungsgemäß dadurch gelöst, dass wenigstens ein Teil der entnommenen Flüssigkeit über eine Heizleitung durch den Fahrzeugtank geführt und/oder dem Fahrzeugtank zugeführt und damit der Fahrzeugtank beheizt wird.

Diese Lösung hat den Vorteil, dass die gesamte im Fahrzeugtank gespeicherte Flüssigkeit trotz einer örtlichen Begrenzung der Heizfläche der primären Heizvorrichtung und einer Heizflächentemperatur, die nur geringfügig über dem Gefrierpunkt der Flüssigkeit liegt, erwärmt wird. Ein erfindungsgemäß ausgestaltetes Tankentnahmesystem nutzt die dem Fahrzeugtank entnommene Flüssigkeit zumindest teilweise als Heizfluid, um über eine sekundäre Heizvorrichtung auch weiter entlegene Bereiche des Fahrzeugtanks zu erwärmen. Die wärmeübertragende Fläche der primären Heizvorrichtung wird durch die sekundäre Heizvorrichtung indirekt vergrößert. Der Überschuss an Wärmeenergie, der beispielsweise bei dem kurzfristigen Aufschmelzen eines begrenzten Kaltstartvolumens entsteht, wird durch das Leitungssystem gezielt in von dem Kaltstartvolumen weiter entfernte Stellen des Fahrzeugtanks geführt. Indem die im Fahrzeugtank gespeicherte Flüssigkeit für die Tankbeheizung als Wärmeträgermedium genutzt wird, wird keine Energie für die Erwärmung eines weiteren Wärmeträgers benötigt.

Ein erfindungsgemäßes Tankentnahmesystem kann insbesondere zum Abschmelzen und zur Entnahme der für einen Flüssigkeitsverbraucher, wie beispielsweise einen SCR-Katalysator oder eine Scheiben- und Scheinwerferwaschanlage, bestimmten Flüssigkeit in Fahrzeugtanks verwendet werden. Sie kann insbesondere dazu verwendet werden, eine wässrige Harnstofflösung, vorzugsweise mit einem Harnstoffanteil von 30 bis 35%, oder eine Reinigungslösung für Scheiben- und/oder Scheinwerferwaschanlagen abzuschmelzen.

Ein erfindungsgemäßes Tankentnahmesystem ermöglicht nicht nur das energieeffiziente Aufschmelzen des Tankinhalts nach einem Kaltstart. Es eignet sich auch, ein Vereisen des Tankinhaltes während des Betriebes, beispielsweise aufgrund einer fallenden Umgebungstemperatur, zu verhindern.

Die erfindungsgemäße Ausgestaltung des Tankentnahmesystems kann durch weitere, jeweils für sich unabhängige vorteilhafte Ausgestaltungen weiter verbessert werden. Die einzelnen Ausgestaltungen sind dabei jeweils beliebig miteinander kombinierbar.

Gemäß einer ersten vorteilhaften Ausgestaltung kann die Heizleitung eine Rücklaufleitung umfassen, durch welche die zuvor durch die Entnahmeleitung entnommene Flüssigkeit dem Fahrzeugtank wieder zugeführt wird. Eine im Fahrzeugtank angeordnete Rücklauföffnung am Ende der Rücklaufleitung kann dabei an jeder Stelle des Tanks angeordnet werden, insbesondere im Bereich der Entnahmeöffnung der Entnahmeleitung. Indem die im Bereich der Entnahmeöffnung bereits erwärmte Flüssigkeit über die Rücklaufleitung in kältere Bereiche des Fahrzeugtanks gefördert wird, kann ein unmittelbarer Wärmetransport stattfinden. Ist die Flüssigkeit im Tank insbesondere im Bereich der Entnahme- und der Rücklauföffnung soweit abgeschmolzen, dass eine flüssigkeitsleitende Verbindung zwischen der Entnahmeöffnung und der Rücklauföffnung entsteht, bildet die Heizleitung mit der Entnahmeleitung einen Flüssigkeitskreislauf. Die Flüssigkeit, die durch die Entnahmeöffnung aus dem abgeschmolzenen Bereich im Tank abgesaugt wird, gelangt über die Entnahmeleitung und die Rücklaufleitung wieder in den Tank. Durch diesen Flüssigkeitskreislauf findet ein kontinuierlicher Transport der Wärmeenergie von durch die primäre Heizvorrichtung erwärmten Bereichen, beispielsweise dem Kaltstartvolumen, in kältere Bereiche des Fahrzeugtanks statt.

Um bei einer Erstbefüllung des Tankentnahmesystems oder nach einer Entleerung des Fahrzeugtanks eine Befüllung der Entnahme- und Rücklaufleitungen zu ermöglichen, kann eine zusätzliche Befüllöffnung an einer oben liegenden Stelle der Entnahmeleitung oder der Rücklaufleitung vorgesehen werden. Damit die in den Leitungen befindliche Luft bei dem Befüllvorgang entweichen kann, können in einer vorteilhaften Ausgestaltung verschließbare Entlüftungsöffnungen oder Entlüftungsventile an oben liegenden Abschnitten der Leitungen angeordnet werden, die während des Befüllvorgangs geöffnet werden.

In einer weiteren Ausgestaltung kann die Rücklaufleitung mehrere Rücklauföffnungen aufweisen, durch welche an verschiedenen Stellen des Tankvolumens ein direkter Wärmetransport über das Heizfluid möglich wird. Durch die Wärmeabgabe des Heizfluids an den Rücklauföffnungen entstehen mit Flüssigkeit gefüllte Hohlräume im Eis, durch welche das Heizfluid weiter in das gefrorene Flüssigkeitsvolumen vordringt. Dadurch erhöht sich die Effektiviät der Wärmeübertragung der sekundären Heizvorrichtung.

Insbesondere, wenn eine Rücklauföffnung in entlegenen Bereichen des Fahrzeugtanks liegt, ist es vorteilhaft, eine zweite Entnahmeleitung vorzusehen, deren Entnahmeöffnung im Bereich der Rücklauföffnung angeordnet ist. So legt die aus der Rücklauföffnung in den Tank eintretende Flüssigkeit nur einen kurzen Weg im nicht von einer Leitung umschlossenen Bereich der im Tank vorhandenen Flüssigkeit zurück, um in dem von Entnahme- und Heizleitung gebildeten Flüssigkeitskreislauf zu verbleiben. Es muss auf diese Weise nur ein kleines Volumen der gefrorenen Flüssigkeit im Tank abgeschmolzen werden, um den Flüssigkeitskreislauf zu schließen, der einen kontinuierlichen Transport des Heizfluids durch die Heizleitung und eine gleichmäßige Erwärmung des Tankinhalts ermöglicht. Sind mehrere Rücklaufleitungen vorgesehen, können entsprechend mehrere Entnahmeleitungen vorgesehen sein. Weist eine Rücklaufleitung mehrere Rücklauf öffnungen auf, können diesen entsprechend mehrere Entnahmeöffnungen einer oder mehrere Entnahmeleitungen gegenübergestellt sein.

Umfasst das Tankentnahmesystem beispielsweise zwei Entnahmeleitungen, kann in einer vorteilhaften Ausgestaltung in wenigstens einer Entnahmeleitung ein Ventil oder eine Drossel vorgesehen sein. Indem durch ein solches Ventil das Volumen der durch die entsprechende Entnahmeleitung strömenden Flüssigkeit eingestellt wird, kann das Verhältnis der Entnahmevolumina der Entnahmeleitungen eingestellt werden. Auf diese Weise kann der Weg der aufgetauten Flüssigkeit durch den Fahrzeugtank gesteuert werden, um bestimmte Bereiche im Fahrzeugtank gezielt zu enteisen. Das Ventil kann elektrisch oder hydraulisch betätigbar ausgestaltet sein, um eine Regelung des Verhältnisses der Entnahmevolumina zu ermöglichen.

Ist mehr als eine Rücklaufleitung vorgesehen, kann das Tankentnahmesystem in einer vorteilhaften Ausgestaltung Ventile oder Drosseln in den Rücklaufleitungen aufweisen, um das Verhältnis der Rücklaufvolumina der Rücklaufleitungen einzustellen oder zu regeln.

In einer weiteren vorteilhaften Ausgestaltung können beide Enden der Heizleitung flüssigkeitsleitend mit der Entnahmeleitung verbunden sein. Dadurch entsteht ein geschlossener Flüssigkeitskreislauf, der durch die Heizleitung mit der Entnahmeleitung gebildet wird. Wird die Heizleitung des Fahrzeugtanks auch in von der Entnahmeöffnung weiter entfernten Bereichen angeordnet, können auch entlegene Bereiche des Fahrzeugtanks, beispielsweise eine Ausbuchtung mit einem verringerten Querschnitt, mit Wärmeenergie versorgt werden. Ein weiterer Vorteil dieser Ausgestaltung ist, dass der von Entnahme- und Heizleitung gebildete Kreislauf nicht über die im Tank befindliche Flüssigkeit hergestellt werden muss. Das sekundäre Heizsystem kann ohne einen aufgeschmolzenen Bereich im Tank außerhalb des Kaltstartvolumens betrieben werden. Es müssen lediglich die Leitungen enteist werden.

Die Förderung der erwärmten Flüssigkeit kann durch natürliche Konvektion erfolgen, weil die im Bereich der Entnahmeöffnung erwärmte Flüssigkeit aufgrund ihrer verringerten Dichte in der Entnahmeleitung aufsteigt und somit in die Heizleitung gelangt. Eine gezieltere und schnellere Wärmeübertragung kann durch eine erzwungene Konvektion erreicht werden, indem eine mit der Entnahmeleitung verbundene, zwischen Entnahmeöffnung und Heizleitung angeordnete Pumpe vorgesehen wird. Die Pumpe kann gleichzeitig als Förderpumpe für die Tankentnahme der Flüssigkeit verwendet werden, indem ihre Förderleistung auf den Transport der Flüssigkeit zum Verbraucher oder zur Heizleitung aufgeteilt wird.

Um die Menge der von der Entnahmeleitung in die Heizleitung geleiteten Flüssigkeit einstellen zu können, ist ein zwischen Entnahmeleitung und Heizleitung angeordnetes Ventil von Vorteil, das die Heizleitung von der Entnahmeleitung abzweigt. Es kann ein stufenlos einstellbares Ventil vorgesehen werden, das eine beliebige Einstellung der zum Verbraucher oder in die Heizleitung geförderten Flüssigkeitsmenge ermöglicht. Wird mit dem Ventil der zum Verbraucher führende Abschnitt der Entnahmeleitung verschlossen, kann das Heizfluid in der sekundären Heizvorrichtung auch nur durch natürliche Konvektion durch einen von Entnahme- und Heizleitung gebildeten Flüssigkeitskreislauf gefördert werden.

Die Aufteilung der Förderleistung einer zwischen Entnahmeöffnung und Heizleitung angeordneten Pumpe auf den Transport zum Verbraucher oder zur Heizleitung kann mit einem Ventil beliebig eingestellt werden. So kann die Pumpe mit einem Teil oder mit ihrer gesamten Förderleistung die Flüssigkeit in die Heizleitung oder zum Verbraucher fördern.

Die primäre Heizvorrichtung, die vorzugsweise elektrische Heizelemente aufweist, kann im Bereich der Entnahmeleitung oder der Entnahmeöffnung so angeordnet sein, dass sie neben dem Kaltstartvolumen auch die Entnahmeleitung beheizt. In diesem Fall wird nur eine Heizvorrichtung benötigt, um das Kaltstartvolumen abzuschmelzen und die Entnahmeleitung zu enteisen.

Die Leistung der primären Heizvorrichtung ist limitiert, um ein Verdampfen oder ein Zersetzen der Flüssigkeit zu vermeiden. In einer vorteilhaften Ausführungsform kann die primäre Heizvorrichtung des Tankentnahmesystems ein Kaltleiter-Heizelement als elektrisches Heizelement aufweisen. Kaltleiter, auch PTC-Heizelemente (positive temperature coefficient) genannt, heizen sich nur bis zu einer vorbestimmten Grenztemperatur auf, bei welcher sich der elektrische Widerstand des PTC-Elementes sprungartig erhöht und ein weiteres Aufheizen verhindert. Auf diese Weise sind PTC-Elemente selbstregulierend, so dass auf eine Temperatursteuereinrichtung verzichtet werden kann.

Alternativ kann die primäre Heizvorrichtung zur Erzeugung der Heizwärme auch andere Widerstandselemente aufweisen, beispielsweise Heizdrähte oder Dickschichtelemente. Um ein Überschreiten einer vorbestimmten Grenztemperatur zu verhindern, kann die Heizleistung begrenzt werden. In einer weiteren Ausgestaltung kann zur Regelung der Heizleistung ein Thermostat oder eine elektronische Regelung vorgesehen werden, welches das Überschreiten einer voreingestellten Temperatur in dem Heizelement oder in der an das Heizelement angrenzenden Flüssigkeit verhindert, indem die Heizleistung verringert oder die Heizelemente abgeschaltet werden.

Durch das Vorsehen zusätzlicher Heizelemente, welche die außerhalb und/oder innerhalb des Fahrzeugstanks liegenden Entnahmeleitungen beheizen, können die Entnahmeleitungen unabhängig von der Beheizung des Kaltstartvolumens enteist werden. Diese Ausführung weist den Vorteil auf, dass die Beheizung der Entnahmeleitungen nach deren Enteisung abgeschaltet werden kann.

Weitere Heizelemente, welche die Rücklauf- oder Heizleitungen beheizen, können für eine schnelle Enteisung der sekundäre Heizvorrichtung sorgen, so dass diese bereits kurz nach einem Kaltstart des Fahrzeugs in Betrieb genommen werden kann. Diese Heizelemente können unabhängig von der primären Heizvorrichtung betrieben werden, so dass sie nach der Enteisung der Leitungen abgeschaltet werden können. Für eine Vereinfachung der Konstruktion oder eine Verringerung der Anzahl der für die Beheizung benötigten Bauteile können die Heizelemente der Rücklauf- oder Heizleitungen auch Teil der primären Heizvorrichtung sein.

In einer vorteilhaften Ausgestaltung kann das Ventil mit einer Ventilbeheizung und/oder die Pumpe mit einer Pumpenbeheizung versehen sein, um insbesondere bei einem Kaltstart des Fahrzeugs die Enteisung des Leitungssystems zu beschleunigen. Mit einer Beheizung des Ventils oder der Pumpe werden außerdem durch Eisklumpen hervorgerufene Schäden vermieden.

Eine elektronische Steuerung des Tankentnahmesystems kann mit einer Beheizung versehen sein, um negative Folgen niedriger Umgebungstemperaturen für die auf einer Elektronikplatine oder Leiterplatte angeordneten elektrischen Bauelemente, wie beispielsweise verlängerte Ansprechzeiten oder Fehlfunktionen, zu vermeiden. Eine Beheizung bietet zudem den Vorteil, dass unerwünschte Kondensation an den elektrischen Bauelementen verhindert werden kann, indem die Bauelemente auf eine Temperatur oberhalb der Kondensationstemperatur erwärmt werden. Für die Beheizung kann ein Platinenheizbaustein auf den Elektronikplatinen angebracht werden, der die Bauelemente nach Inbetriebnahme des Tankentnahmesystems auf eine vorbestimmte Temperatur erwärmt.

In einer weiteren vorteilhaften Ausgestaltung können Wärme abgebende Elemente des Tankentnahmesystems, beispielsweise die Pumpe oder die elektronische Steuerung, in unmittelbarer Nähe der Entnahme- oder der Heizleitung angeordnet werden. Auf diese Weise kann die abgegebene Wärme besser für die Beheizung der Entnahme- oder Heizleitung genutzt werden.

Die Wärme abgebenden Elemente können durch eine Wärmebrücke, einen Bereich mit höherer Wärmeleitfähigkeit, wärmeleitend mit der Entnahme- oder der Heizleitung verbunden werden. Die Wärmebrücke kann durch die Formgebung der Wärme abgebenden oder der Wärme aufnehmenden Elemente hergestellt werden, indem beispielsweise die wärmeabgebenden Elemente derart gestaltet werden, dass sie an die Entnahme- oder die Rücklaufleitung angrenzen. Alternativ oder zusätzlich können Wärmeleiter aus Materialien mit höherer Leitfähigkeit, beispielsweise Aluminium, vorgesehen werden, welche Wärme abgebende Elemente wärmeleitend mit der Entnahmeleitung, der Heizleitung oder der Flüssigkeit im Fahrzeugtank verbinden.

Sind elektrische Bauelemente, beispielsweise die elektronische Steuerung, mit der Entnahme- oder der Rücklaufleitung wärmeleitend verbunden, können Heizelemente gleichzeitig für die Enteisung der Entnahme- oder Rücklaufleitung und für die Beheizung der elektrischen Bauelemente verwendet werden. Dadurch werden die Anzahl der Teile und damit die Herstellkosten des Tankentnahmesystems verringert.

Um die Abwärme der Pumpe für die Beheizung des Tanks zu nutzen, kann die Pumpe innerhalb oder in einer Ein- und/oder Ausbuchtung außerhalb des Fahrzeugtanks angeordnet sein.

Um die Abwärme der Steuerelektronik für die Beheizung des Tanks zu nutzen, kann auch diese innerhalb oder in einer Ein- und/oder Ausbuchtung außerhalb des Fahrzeugtanks angeordnet sein.

In einer weiteren vorteilhaften Ausgestaltung kann auch das Ventil innerhalb oder in einer Ein- und/oder Ausbuchtung außerhalb des Fahrzeugtanks angeordnet sein. Dadurch können Wärmeverluste durch das Ventil vermieden werden. Zusätzlich kann so die Länge der für das Leitungssystem verwendeten Leitungen insgesamt verkürzt sein.

In einer weiteren, auch für sich allein stehend betrachtet vorteilhaften Ausführung können Teile der Entnahmeleitung und/oder der Heizleitung zusammen mit Heizelementen und weiteren Elementen des Tankentnahmesystems zu einer Montageeinheit verbunden werden. Eine derartige Montageeinheit bildet in dem Tankentnahmesystem eine in sich geschlossene Baugruppe. Eine Montageeinheit kann als Modul mit definierten Schnittstellen für den Anschluss an das Tankentnahmesystem ausgeführt werden. Auf diese Weise wird die Montage des Tankentnahmesystems deutlich vereinfacht.

Beispielsweise kann ein Abschnitt der Entnahmeleitung, der die Entnahmeöffnung umfasst zusammen mit Heizelementen in eine Entnahmeeinheit integriert werden. Um die Montage des Tankentnahmesystems zu vereinfachen, kann die Entnahmeeinheit mit einem Gehäuse versehen werden, das die miteinander verbundenen Elemente der Entnahmeeinheit trägt und nach außen abschließt. Die Entnahmeeinheit kann dann über ihr Gehäuse mit dem Fahrzeugtank kraft- oder formschlüssig verbunden werden. An dem Gehäuse können Anschlüsse für flüssigkeitsleitende Verbindungen vorgesehen werden, um den in die Entnahmeeinheit integrierten Abschnitt der Entnahmeleitung mit weiteren Abschnitten der Entnahmeleitung zu verbinden. Es können außerdem Anschlüsse für elektrisch leitende Verbindungen vorgesehen werden, um elektrische Heizelemente an die Steuerelektronik anzuschließen.

In einer weiteren vorteilhaften Ausgestaltung eines Moduls kann dieses derart ausgestaltet sein, dass es wenigstens abschnittsweise in eine Montageöffnung des Fahrzeugtanks eingeführt werden kann. Auf diese Weise können Wärme abgebende Elemente, beispielsweise eine in das Modul integrierte Pumpe, im Fahrzeugtank angeordnet werden, um die entstehende Wärme für die Beheizung der im Tank befindlichen Flüssigkeit zu nutzen. Durch eine dichtende Verbindung zwischen Fahrzeugtank und Modul, beispielsweise einen Flansch, kann die Montageöffnung im Fahrzeugtank über das Modul verschlossen werden.

In einer weiteren, auch für sich allein stehend betrachtet, vorteilhaften Ausführungsform kann die Steuerelektronik des Tankentnahmesystems zusammen mit einem Abschnitt der Entnahmeleitung und mit Heizelementen in einem Modul zusammengefasst werden. Auf diese Weise kann die Steuerelektronik unmittelbar an den Heizelementen angeordnet werden, um negative Folgen niedriger Umgebungstemperaturen für die auf einer Elektronikplatine oder Leiterplatte angeordneten elektrischen Bauelemente, wie beispielsweise verlängerte Ansprechzeiten oder Fehlfunktionen, zu vermeiden oder eine unerwünschte Kondensation an den elektrischen Bauelementen zu verhindern. Außerdem kann die abgegebene Wärme der Steuerelektronik unmittelbar für die Beheizung der Entnahmeleitung und/oder der Flüssigkeit im Fahrzeugtank verwendet werden. Ein weiterer Vorteil dieser Ausführungsform sind die kürzeren elektrisch leitenden Verbindungen zwischen Steuergerät und Heizelementen. Die für den elektrischen Anschluss der Heizelemente benötigten Kabelleitungen größeren Querschnittes müssen nicht für den Anschluss an ein externes Steuergerät aus dem Modul herausgeführt werden.

Sind in einer vorteilhaften Ausführungsform ein Abschnitt einer Entnahmeleitung mit Entnahmeöffnung, eine Steuerelektronik und Heizelemente für die Beheizung der Entnahmeleitung und/oder der Steuerelektronik in einem Modul zusammengefasst, kann dieses als eigenständige Entnahmeeinheit mit oder ohne sekundäre Heizvorrichtung eingesetzt werden.

In weiteren vorteilhaften Ausführungsformen kann die Heizleistung des Tankentnahmesystems auf einfache Weise verbessert werden, indem mehrere Entnahmeeinheiten in einem Fahrzeugtank eingesetzt werden. Da jede Entnahmeeinheit eigene Heizelemente umfasst, vervielfacht sich damit die in dem Fahrzeugtank aufgebrachte Heizleistung. Gleichzeitig vergrößern sich das abschmelzbare Kaltstartvolumen und der entnehmbare Volumenstrom.

Gemäß einer weiteren möglichen Verbesserung kann ein Modul weitere für die Tankentnahme erforderliche Elemente umfassen. Neben der Entnahmeleitung, Heizelementen und der Steuerelektronik kann auch eine Pumpe und eine Rücklaufleitung in das Modul integriert werden. Damit kann ein Modul ein vollständiges Tankentnahmesystem umfassen, das in einem Schritt an einem Fahrzeugtank montiert werden kann.

Ein Modul kann in einer weiteren Ausgestaltung statt eines Abschnittes einer Entnahmeleitung einen Abschnitt einer Rücklaufleitung mit einer Rücklauföffnung umfassen. In diesem Fall bildet das Modul mit den Heizelementen für die Beheizung der Rücklaufleitung und/oder der Steuerelektronik eine Rücklaufeinheit.

In einer weiteren vorteilhaften Ausführungsform des Tankentnahmesystems können Entnahmeeinheiten und Rücklaufeinheiten identisch aufgebaut sein. Damit wird ein einfaches modulares Tankentnahmesystem bereitgestellt, das über die Verwendung von nur einem Modultyp für Entnahme- oder Rücklaufeinheit konfiguriert werden kann. Die Heizleistung und die Förderleistung des Tankentnahmesystems kann gemäß dieser Ausführungsform über die Anzahl eingesetzter Entnahme- und/oder Rücklaufeinheiten bestimmt werden. Soll beispielsweise ein größerer Fahrzeugtank beheizt oder ein größeres Flüssigkeitsvolumen in kürzerer Zeit bereitgestellt werden, kann die Heizleistung durch die Verwendung einer größeren Zahl von Entnahme- und/oder Rücklaufeinheiten vergrößert werden. Während durch den Einsatz von mehr Entnahmeeinheiten insbesondere die Heizleistung der primären, elektrischen Heizvorrichtung vergrößert werden kann, kann durch den Einsatz von mehr Rücklaufeinheiten das Heizfluidvolumen und damit die Heizleistung der sekundären Heizvorrichtung vergrößert werden.

Gemäß einer weiteren vorteilhaften Ausgestaltung können ein oder mehrere Metall-Oxid-Halbleiter-Feldeffekttransistoren (MOSFET) für die Schaltung der Heizelemente verwendet werden. Da eine zu starke Wärmeentwicklung im Bereich der Steuerelektronik unerwünscht ist, kann die von diesen Transistoren abgegebene Wärme über eine Wärmebrücke, einen Bereich mit höherer Wärmeleitfähigkeit, an die Entnahme- oder Heizleitung abgegeben werden. Um die Wärmeleitung der von den MOSFETs abgegebenen Wärme in die Flüssigkeit zu verbessern, können diese in unmittelbarer Nähe der Flüssigkeit angeordnet werden.

Für die Schaltung verschiedener Heizleistungen können mehr oder weniger MOSFETs verwendet werden. Wird beispielsweise eine niedrige Heizleistung mit einem MOSFET geschaltet, kann eine vergrößerte oder verdoppelte Heizleistung mit zwei MOSFETs geschaltet werden. Es können mehrere Heizelemente durch ein MOSFET geschaltet werden. Alternativ kann, um die Abstufung der geschalteten Heizleistung zu verfeinern, ein Heizelement durch ein oder durch mehrere MOSFETs geschaltet werden.

Um Wärmeverluste durch die Flüssigkeitsleitungen zu verringern, kann das Leitungssystem in einer vorteilhaften Ausgestaltung vollständig innerhalb des Fahrzeugtanks angeordnet sein.

In einer weiteren vorteilhaften Ausgestaltung kann der Fahrzeugtank und/oder das Leitungssystem mit einer thermischen Isolierung versehen sein. Der Fahrzeugtank und das Leitungssystem können von einer gemeinsamen thermischen Isolierung umgeben sein, die Wärmeverluste des Leitungssystems dem Fahrzeugtank zuführt.

Zusätzlich kann eine Verwirbelungsvorrichtung vorgesehen sein, welche die Konvektion innerhalb des Fahrzeugtanks durch das Verwirbeln der erwärmten Flüssigkeit verstärkt. Die Verwirbelungsvorrichtung kann insbesondere im Kaltstartvolumen oder im Bereich der Rücklauföffnung der Heizung angeordnet sein, um die erwärmte Flüssigkeit aus diesen Bereichen des Fahrzeugtanks zu umliegenden Bereichen zu fördern.

Im Folgenden wird die Erfindung anhand unterschiedlicher Ausführungsformen mit Bezug auf die Figuren beispielhaft erläutert. Dabei stellen die beschriebenen Ausführungsformen lediglich mögliche Ausgestaltungen dar, die für den jeweiligen Anwendungsfall modifiziert werden können. Einzelne, für sich vorteilhafte Merkmale können gemäß der obigen Beschreibung der vorteilhaften Ausgestaltungen bei der jeweils beschriebenen Ausführungsform hinzugefügt oder weggelassen werden.

Es zeigen:
- Fig. 1: eine schematische Darstellung eines ersten Ausführungsbeispiels der Erfindung;
- Fig. 2: eine schematische Darstellung eines weiteren Ausführungsbeispiels der Erfindung, das sich von dem in Fig. 1 gezeigten Ausführungsbeispiel durch eine zweite Entnahmeleitung unterscheidet;
- Fig. 3: eine schematische Darstellung eines dritten Ausführungsbeispiels der Erfindung, das sich von den bisherigen Ausführungsbeispielen durch eine an beiden Enden mit der Entnahmeleitung flüssigkeitsleitend verbundene Heizleitung unterscheidet.
- Fig. 4: eine schematische Darstellung eines vierten Ausführungsbeispiels der Erfindung, das sich von den bisherigen Ausführungsbeispielen durch ein im Tank angeordnetes Tankentnahmesystem unterscheidet.
- Fig. 5: eine perspektivische Ansicht einer Entnahmeeinheit des erfindungsgemäßen Tankentnahmesystems.
- Fig. 6: eine Schnittansicht einer Entnahmeeinheit des erfindungsgemäßen Tankentnahmesystems.

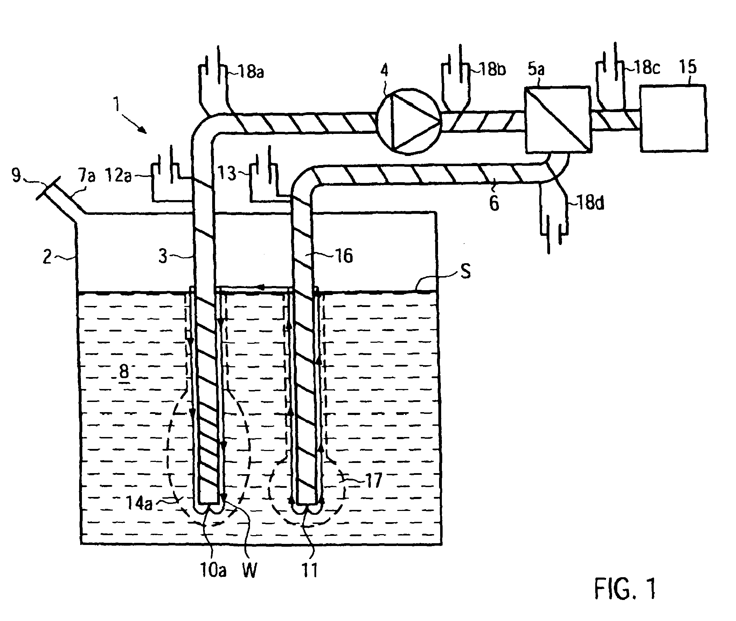

Zunächst wird der Aufbau eines erfindungsgemäßen Tankentnahmesystems mit Bezug auf das Ausführungsbeispiel der Fig. 1 beschrieben.

In Fig. 1 ist das Tankentnahmesystem 1 mit dem Fahrzeugtank 2 gezeigt. Das Tankentnahmesystem 1 umfasst eine Entnahmeleitung 3, eine Pumpe 4, ein Ventil 5a und eine Heizleitung 6. Der Fahrzeugtank 2 weist eine Einfüllöffnung 7a zum Befüllen des Fahrzeugtanks 2 mit einer Flüssigkeit 8 auf. Die Einfüllöffnung 7a des Fahrzeugtanks 2 ist mit einem Tankdeckel 9 verschlossen. Die Entnahmeleitung 3 durchbricht die Wand des Fahrzeugtanks 2 und taucht in die im Fahrzeugtank gespeicherte Flüssigkeit 8 ein. Die Entnahmeleitung 3 ist an ihrem Ende mit einer Entnahmeöffnung 10a versehen. Auch die Heizleitung 6 durchbricht die Wand des Fahrzeugtanks 2. Die Heizleitung 6 weist als ein in die im Fahrzeugtank enthaltene Flüssigkeit eintauchenden Fortsatz eine Rücklaufleitung 16 auf, die an ihrem Ende mit einer Rücklauföffnung 11 versehen ist. Das Tankentnahmesystem 1 weist eine primäre Heizvorrichtung auf, die eine Entnahmeheizung 12a sowie eine Rücklaufheizung 13 umfasst.

Die Entnahmeheizung 12a enteist innerhalb kurzer Zeit die Entnahmeleitung 3 und schmilzt gleichzeitig ein Kaltstartvolumen 14a auf, das sich von der Entnahmeöffnung 10a bis zum Fluidspiegel S erstreckt. Die abgeschmolzene Flüssigkeit im Kaltstartvolumen 14a gelangt durch die Entnahmeöffnung 10a in die Entnahmeleitung 3 und wird über die Pumpe 4 aus dem Fahrzeugtank 2 gefördert. Durch das Ventil 5a gelangt die aufgeschmolzene Flüssigkeit zum Verbraucher 15. Wenigstens ein Teil der Flüssigkeit kann über das Ventil in die Heizleitung 6 abgezweigt werden.

Die Heizleitung 6 ist über das Ventil 5a mit der Entnahmeleitung 3 flüssigkeitsleitend verbunden. Sie umfasst eine Rücklaufleitung 16, die wenigstens abschnittsweise in die im Tank enthaltene Flüssigkeit 8 eintaucht. Die Rücklaufleitung 16 und das an die Rücklaufleitung angrenzende Rücklaufvolumen 17 wird durch die Rücklaufheizung 13 innerhalb kurzer Zeit enteist. Die durch die Rücklaufleitung 16 geförderte Flüssigkeit gelangt durch die Rücklauföffnung 11 in den Fahrzeugtank 2, wo sich das Rücklaufvolumen 17 bildet, das sich von der Rücklauföffnung 11 bis zum Fluidspiegel S erstreckt.

Bei einem Kaltstart werden die Entnahme- 3 und die Rücklaufleitung 16 durch die Entnahmeheizung 12a und Rücklaufheizung 13 enteist. Im Bereich der Entnahmeöffnung 10a schmilzt die Entnahmeheizung 3 zusätzlich das Kaltstartvolumen 14a auf. Nach der Enteisung der Leitungen startet die Pumpe 4 und saugt die abgeschmolzene Flüssigkeit aus dem Kaltstartvolumen 14a in die Entnahmeleitung 3. Das Ventil 5a zweigt die Flüssigkeit zumindest teilweise in die Heizleitung 6 ab. Durch die Rücklauföffnung 11 wird die Flüssigkeit in das Rücklaufvolumen 17 gedrückt. Durch den entstehenden Druck im Rücklaufvolumen 17 gelangt die Flüssigkeit entlang dem Fluidweg W durch den an die Rücklaufleitung 16 angrenzenden enteisten Bereich des Rücklaufvolumens 17 bis oberhalb des Fluidspiegels S. Die auf dem Fluidspiegel S befindliche Flüssigkeit wird durch die Pumpe 4 über das an den Fluidspiegel S angrenzende Kaltstartvolumen W abgesaugt und gelangt auf diesem Weg erneut in die Entnahmeleitung 3. Die abgeschmolzene Flüssigkeit kann auf diese Weise kontinuierlich zirkulieren und die im Bereich der Entnahmeheizung 12a und der Rücklaufheizung 13 aufgenommene Wärmeenergie in der Flüssigkeit 8 verteilen.

Die im Rücklaufvolumen 17 gespeicherte Wärme geht auf die umliegende gefrorene Flüssigkeit über und vergrößert den aufgeschmolzenen Bereich. Nach einiger Zeit verbinden sich das Kaltstartvolumen 14a und das Rücklaufvolumen 17 zu einem mit geschmolzener Flüssigkeit gefüllten Hohlraum im Eis, der den von Entnahmeleitung 3 und Heizleitung 6 gebildeten Flüssigkeitskreislauf schließt. Für die weitere, gleichmäßige Erwärmung der Flüssigkeit 8 kann nun wenigstens eines der Heizelemente, beispielsweise die Rücklaufheizung 13, abgeschaltet werden.

Zusätzlich zu den Entnahmeheizung 12a und der Rücklaufheizung 13 kann die primäre Heizvorrichtung weitere Heizelemente 18a, 18b, 18c, 18d umfassen, die insbesondere an den außen liegenden Abschnitten der Entnahmeleitung 3 und/oder der Heizleitung 6 angeordnet sind. So können auch die außen liegenden Abschnitte des Leitungssystems bei einem Kaltstart des Fahrzeugs enteist oder bei Außentemperaturen unter dem Gefrierpunkt der geförderten Flüssigkeit 8 eisfrei gehalten werden.

Alternativ zu separaten Heizelementen 12a, 13, 18a, 18b, 18c, 18d können die Heizelemente, um Material oder Bauteile zu sparen, beliebig zusammengeführt werden. Beispielsweise können die Heizelemente 18a, 18b, 18c durch ein gemeinsames Heizelement, beispielsweise einen durchgängigen, parallel zu den Leitungsabschnitten angeordneten Widerstandsdraht beheizt werden. Alternativ oder zusätzlich zu den Leitungen können auch die Pumpe 4 und/oder das Ventil 5a mit Heizelementen versehen werden.

Um die sekundäre Heizvorrichtung mit einer möglichst großen wärmeübertragenden Oberfläche auszugestalten kann die Heizleitung 6 gekrümmt, insbesondere spiral- oder wendelförmig durch das Tankvolumen verlaufen, so dass sie insgesamt verlängert und damit ihre Heizfläche vergrößert wird. Es können mehrere Rücklaufleitungen 16 vorgesehen sein, die beispielsweise sternförmig oder parallel im Fahrzeugtank angeordnet sind. Der Verlauf der Rücklaufleitungen 16 kann insbesondere bei gekrümmten Wänden des Fahrzeugtanks 2 entsprechend dem Verlauf der Wände ausgestaltet sein.

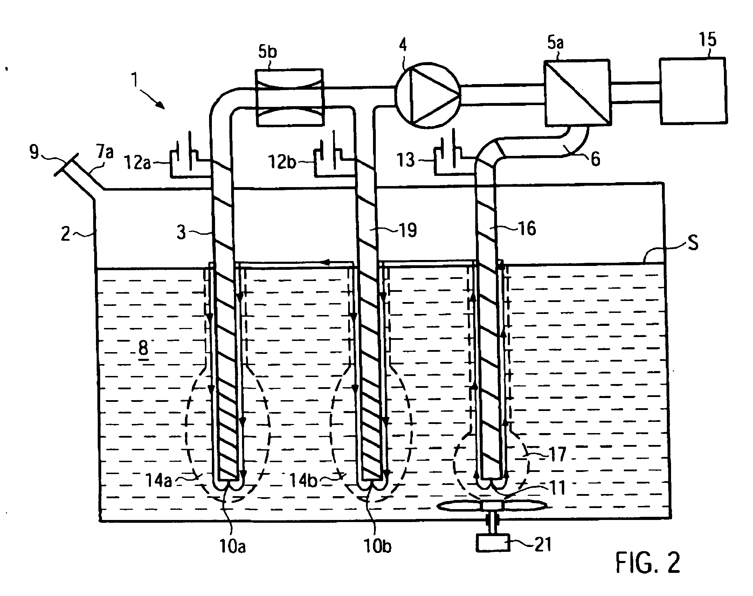

Fig. 2 zeigt ein weiteres Ausführungsbeispiel, wobei für Elemente, die in Funktion und Aufbau den Elementen des Ausführungsbeispiels der Fig. 1 entsprechen, dieselben Bezugszeichen verwendet werden. Der Kürze halber wird hier lediglich auf die Unterschiede zum Ausführungsbeispiel der Fig. 1 eingegangen.

Das Tankentnahmesystem 1 der Fig. 2 weist eine zweite Entnahmeleitung 19 auf, die wie die erste Entnahmeleitung 3 mit einer Entnahmeheizung 12b versehen ist. An der Entnahmeleitung 3 ist eine Drossel 5b vorgesehen, durch welche das Volumen der durch die Entnahmeleitung 3 strömenden Flüssigkeit eingestellt werden kann. Wird der Volumenstrom durch die Entnahmeleitung 3 gedrosselt, verringert sich entsprechend der Saugdruck an der Entnahmeöffnung 10a, während sich der Saugdruck an der Entnahmeöffnung 10b erhöht. Über die Drossel 5b kann auf diese Weise das Verhältnis der Entnahmevolumina der Entnahmeleitungen 3 und 19 eingestellt werden. Die Drossel 5b kann elektrisch oder hydraulisch betätigbar ausgestaltet sein, um eine Regelung des Verhältnisses der Entnahmevolumina realisieren zu können.

Im Bereich der Rücklauföffnung 11 ist eine Verwirbelungsvonichtung 21 angeordnet, welche die Flüssigkeit 8 im Rücklaufvolumen 17 verwirbelt und dadurch den Wärmetransport in die das Rücklaufvolumen 17 umgebenden Bereiche des Fahrzeugtanks 2 beschleunigt. Die Verwirbelungsvorrichtung 21 kann zusätzlich oder alternativ an jeder beliebigen Stelle im Tank 2 angeordnet werden, insbesondere im Kaltstartvolumen 14a, 14b.

Die Entnahmeheizung 12b kann so angeordnet werden, dass sie insbesondere die in der Entnahmeleitung 19 enthaltene Flüssigkeit aufschmilzt, um die Entnahmeleitung 19 zu enteisen. Alternativ kann sie ein Kaltstartvolumen 14b aufschmelzen, so dass nach einem Kaltstart des Fahrzeuges dem Verbraucher die Summe der Kaltstartvolumina 14a und 14b zur Verfügung steht. Bei einem insgesamt gleichbleibenden Kaltstartvolumen wird die Heizfläche der Entnahmeheizungen 12a und 12b auf diese Weise auf zwei Bereiche des Tankvolumens verteilt, so dass mit der Primärheizung eine bessere Wärmeverteilung und eine größere wärmeübertragende Fläche realisiert werden kann.

Um die wärmeübertragende Fläche der primären und/oder der sekundären Heizvorrichtung zu vergrößern, können die Entnahmeleitungen 3,19 gekrümmt, insbesondere spiral-, meander- oder wendelförmig durch das Tankvolumen verlaufen, so dass sie insgesamt verlängert und damit ihre Heizfläche vergrößert wird. Auf diese Weise kann das für die Inbetriebnahme des Verbrauchers 15 benötigte Kaltstartvolumen 14a,14b schneller aufgeschmolzen werden, ohne die Temperatur an den Heizflächen der primären Heizvorrichtung zu erhöhen. Alternativ oder zusätzlich können weitere Entnahmeleitungen vorgesehen werden.

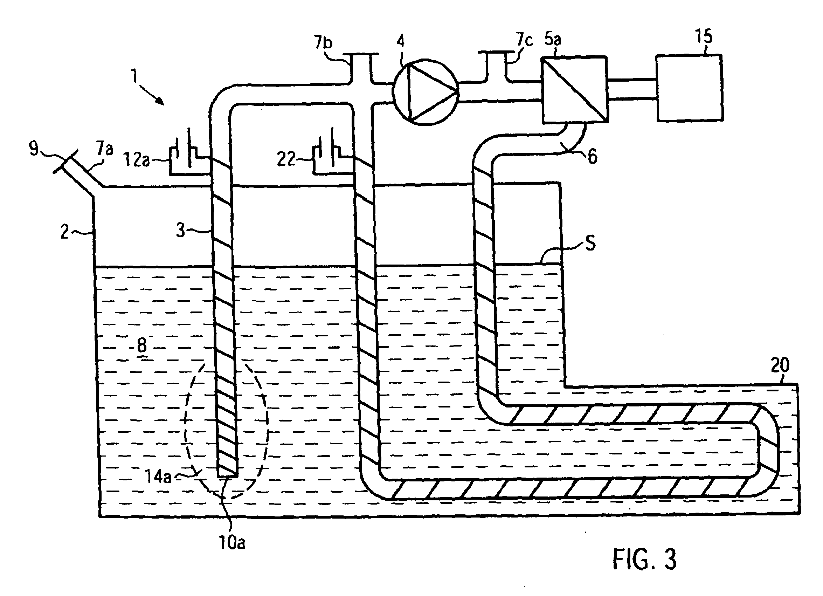

Ein drittes Ausführungsbeispiel zeigt die Fig. 3, wobei für Elemente, die in Funktion und Aufbau den Elementen der Ausführungsbeispiele der Figuren 1 oder 2 entsprechen, dieselben Bezugszeichen verwendet werden. Der Kürze halber wird auf die Unterschiede zu den Ausführungsbeispielen der Figuren 1 und 2 eingegangen.

Die Heizleitung 6 der Fig. 3 ist an beiden Enden mit der Entnahmeleitung 3 verbunden, so dass durch die Heizleitung 6 geförderte Flüssigkeit teilweise in einem geschlossenen Rücklauf verbleibt. Die Heizleitung 6 ist für die Enteisung bei Inbetriebnahme des Tankentnahmesystems 1 mit einer Durchlaufheizung 22 versehen. Für eine Beheizung der Ausbuchtung 20 des Fahrzeugtanks 2 ist die Heizleitung entsprechend der Kontur der Wand des Fahrzeugtanks 2 ausgestaltet, so dass die Wärmeenergie der in der Heizleitung geführten Flüssigkeit auch in entlegene Bereiche des Fahrzeugtanks 2 gelangt.

An der Entnahmeleitung 3 sind eine zusätzliche Einfüllöffnung 7b sowie eine Entlüftungsöffnung 7c angeordnet. Nach einer Befüllung des Fahrzeugtanks 2 durch die Einfüllöffnung 7a kann Luft in der Entnahmeleitung 3 und in der Heizleitung 6 verbleiben. Um bei einer Erstbefüllung des Tankentnahmesystems 1 oder nach einer Entleerung des Fahrzeugtanks 2 die Entnahme- und Rücklaufleitungen zu entlüften, wird durch die Einfüllöffnung 7b Flüssigkeit eingebracht. Indem dabei die Entlüftungsöffnung 7c geöffnet wird, kann die in der Entnahmeleitung 3 bzw. Heizleitung 6 befindliche Luft entweichen. An Stelle der Entlüftungsöffnung 7c kann alternativ ein Entlüftungsventil 7c vorgesehen sein. Um bei dem Befüllvorgang die Pumpe 4 zu umgehen, die im ausgeschalteten Zustand den Durchfluss der Flüssigkeit 8 sperren kann, verbindet während des Befüllens des Tankentnahmesystems 1 das Ventil 5a die Heizleitung 6 mit der Entnahmeleitung 3.

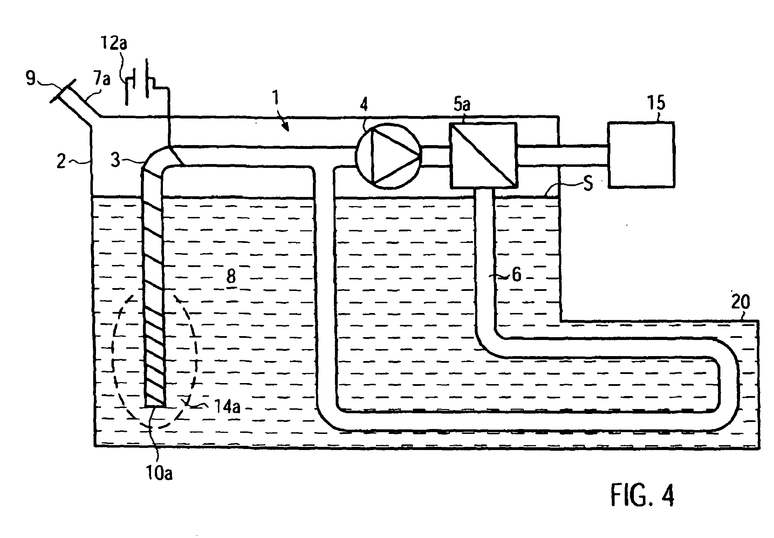

Fig. 4 zeigt ein viertes Ausführungsbeispiel, wobei für Elemente, die in Funktion und Aufbau den Elementen der Ausführungsbeispiele der vorherigen Figuren entsprechen, dieselben Bezugszeichen verwendet werden. Der Kürze halber wird auf die Unterschiede zu den Ausführungsbeispielen der schon beschriebenen Figuren eingegangen.

Die Fig. 4 zeigt das erfindungsgemäße Tankentnahmesystem 1, wobei die Pumpe 4 und das Ventil 5a innerhalb des Fahrzeugtanks 2 angeordnet sind. Indem bei dieser Ausgestaltung bis auf den zum Verbraucher führenden letzten Abschnitt der Entnahmeleitung 3 samtliche Elemente des Tankentnahmesystems 1 innerhalb des Fahrzeugtanks 2 angeordnet sind, verbleiben Wärmeverluste dieser Elemente im Fahrzeugtank und die dem Tankentnahmesystem 1 zugeführte Energie wird noch effizienter genutzt.

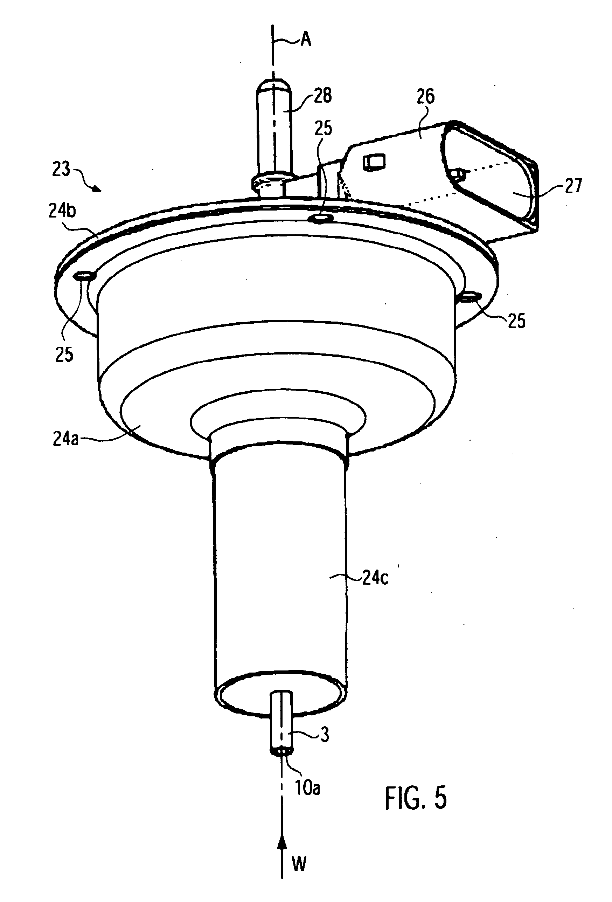

Fig. 5 zeigt eine Entnahmeeinheit 23 des erfindungsgemäßen Tankentnahmesystems, wobei für Elemente, die in Funktion und Aufbau den Elementen der Ausführungsbeispiele der vorherigen Figuren entsprechen, dieselben Bezugszeichen verwendet werden.

Fig. 5 zeigt ein Ausführungsbeispiel einer Entnahmeeinheit 23. Die Entnahmeeinheit 23 weist ein Gehäuse 24 auf, das die Entnahmeleitung 3 umgibt. Das Gehäuse 24 ist aus drei im Wesentlichen rotationssymmetrischen Teilen 24a, 24b, 24c aufgebaut, deren Symmetrieachsen mit der Symmetrieachse A der Entnahmeleitung 3 fluchten. Das Gehäuse 24 weist ein topfförmiges Gehäuseteil 24a auf, dessen zylindrische Seitenwand sich parallel zur Symmetrieachse A erstreckt. Der Boden des topfförmigen Gehäuseteils 24a ist mit einer kreisrunden Aussparung versehen, die von einem sich nach außen, in Richtung der Entnahmeöffnung 10a erstreckenden Rand umgrenzt wird. Auf der Oberseite des Gehäuseteils 24a, gegenüber der kreisrunden Aussparung, erstreckt sich die Außenwand des Gehäuseteils 24a nach außen, weg von der Achse A, und bildet eine Öffnung. An der Öffnung des Gehäuseteils 24a geht die zylindrische Außenwand in einen ringförmigen Bereich über. Der ringförmige Bereich bildet eine breite Auflagefläche, die senkrecht zur Rotationsachse A verläuft. Die Auflagerfläche ist mit kreisförmigen Aussparungen 25 versehen, in die Verbindungselemente, beispielsweise Schrauben, eingeführt werden können.

An die Auflagerfläche des topfförmigen Gehäuseteils 24a grenzt das Gehäuseteil 24b an. Das Gehäuseteil 24b ist mit dem topfförmigen Gehäuseteil 24a verbunden und verschließt dessen von der Entnahmeöffnung 10a weg weisende Öffnung. Das Gehäuseteil 24b weist eine Aufnahme 26 für einen Anschlussstecker auf, die aus dem Gehäuseteil 24b gebildet ist. Die Aufnahme 26 umfasst eine Aufnahmeöffnung 27.

Ein auf der von der Entnahmeöffnung 10a weg weisenden Oberseite der Entnahmeeinheit 23 angeordneter Entnahmestutzen 28 bildet einen Abschnitt der Entnahmeleitung 3. Der Entnahmestutzen 28 durchdringt das topfförmige Gehäuseteil 24a entlang der Rotationsachse A.

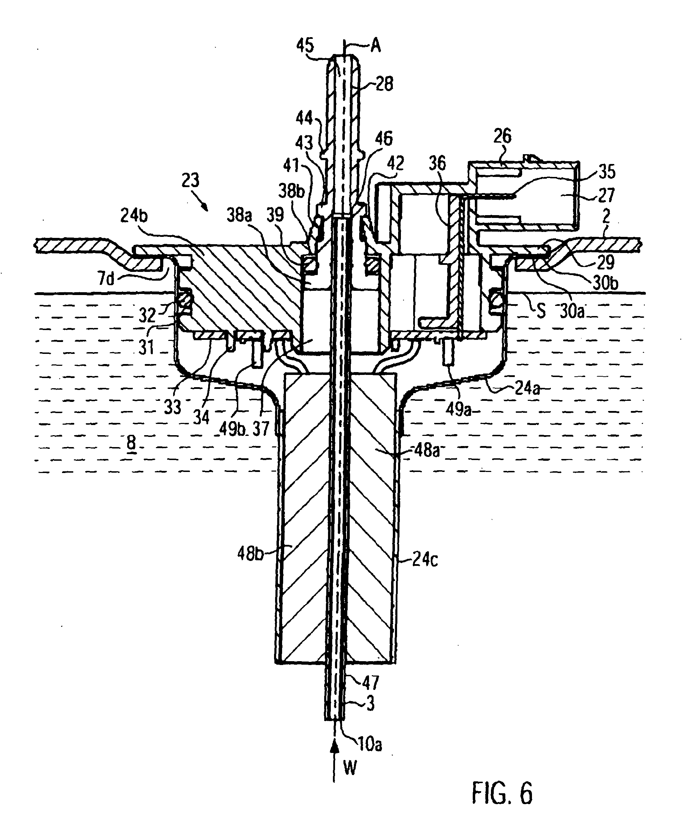

Fig. 6 zeigt eine Schnittansicht der Entnahmeeinheit 23, wobei für Elemente, die in Funktion und Aufbau den Elementen der Ausführungsbeispiele der vorherigen Figuren entsprechen, dieselben Bezugszeichen verwendet werden. Die Entnahmeeinheit 23 ist durch eine Montageöffnung 7d in den Fahrzeugtank 2 eingesetzt und taucht bei gefülltern Fahrzeugtank 2 in die Flüssigkeit 8 ein. Das Gehäuseteil 24b der Entnahmeeinheit 23 weist eine im wesentlichen zylindrische Form auf. Das Gehäuseteil 24b ist in das topfförmige Gehäuseteil 24a eingeführt, wobei die zylinderförmige Außenfläche des Gehäuseteils 24b an die zylinderförmige Innenfläche des topfförmigen Gehäuseteils 24a angrenzt. Ein Fortsatz 29 erstreckt sich auf der von der Entnahmeöffnung 10a weg weisenden Seite des Gehäuseteils 24 b von der zylinderförmigen Außenfläche des Gehäuseteils 24b nach außen. Der Fortsatz 29 bildet eine Auflagefläche 30b, die an der Auflagefläche 30a des topfförmigen Gehäuseteils 24a anliegt. An der zylinderförmigen Außenfläche des deckelförmigen Gehäuseteils 24b ist eine Aussparung 31 vorgesehen, in die eine ringförmige Dichtung 32 eingelegt ist. Die Dichtung 32 dichtet das Gehäuse 24 nach außen ab.

Auf der Unterseite des Gehäuseteils 24b grenzt eine Leiterplatte 33 an, die über Befestigungselemente 34 mit dem Gehäuseteil 24b verbunden ist. Die Leiterplatte 33, die wenigstens einen Teil der Steuerelektronik enthält, ist elektrisch leitend mit mehreren, hintereinander liegenden Leitern 35 verbunden, die sich von der Leiterplatte 33 bis in die Aufnahmeöffnung 27 der Aufnahme 26 erstrecken. In der Aufnahmeöffnung 27 bilden die Leiter 35 Anschlusskontakte, über welche die Leiterplatte 33 mit der Fahrzeugelektrik verbunden werden kann. Die im Wesentlichen zur Rotationsachse A weisenden Flächen der Leiter 35 grenzen an ein Stützelement 36, das formschlüssig in das Gehäuseteil 24b eingesetzt ist. Das Stützelement 36 stabilisiert die Leiter 34, wenn diese bei dem Einführen eines Anschlusssteckers in die Aufnahmeöffnung 27 belastet werden.

Der Entnahmestutzen 28 ist formschlüssig in einer Aussparung 37 des Gehäuseteils 24b gehalten. An seinem in Richtung der Entnahmeöffnung 10a weisenden Ende weist der Entnahmestutzen an seiner Außenfläche einen Absatz 38a auf, auf dem eine ringförmige Dichtung 39 aufliegt. Die Dichtung 39 liegt auf einer dem Absatz 38a gegenüberliegenden Absatz 38b in der Aussparung 37 auf. Wird der Entnahmestutzen 28 von der Entnahmeöffnung aus in Richtung der Achse A belastet, überträgt der Absatz 38a die Last über die Dichtung 39 auf das Gehäuseteil 24b. Oberhalb und unterhalb der Dichtung 39 ist der Entnahmestutzen 28 mit zylindrischen Außenflächen in einem Abschnitt der Aussparung 37 mit zylindrischen Innenflächen geführt.

Oberhalb der Dichtung 39 schließt an die zylindrische Außenfläche des Entnahmestutzens 28 eine Vertiefung 41 an, in die mehrere aus dem Gehäuseteil 24b gebildete elastische Schnappelemente 42 formschlüssig eingreifen. Die an der Außenseite des Gehäuseteils 24b angeordneten elastischen Schnappelemente 42 weisen von der Entnahmeöffnung 10a weg und grenzen an die vertikal zur Achse A verlaufende Fläche des Absatzes 43 an. Oberhalb des Absatzes 43 verjüngt sich der Außendurchmesser des Entnahmestutzens 28. Die Vertiefung 41 und die Schnappelemente 42 bilden eine Schnappverbindung, über die der Entnahmestutzen 28 in dem Gehäuseteil 24b gehalten ist. Um den Entnahmestutzen mit dem Gehäuseteil 24b zu verbinden, wird dieser entlang der Achse A von der Seite der Entnahmeöffnung 10a, 10b in die Aussparung 37 eingeführt.

Ein weiterer Absatz 44 auf der Außenseite des Entnahmestutzens 28 dient dazu, einen Anschlussschlauch kraftschlüssig auf dem Entnahmestutzen 28 zu befestigen. In dem Entnahmestutzen 28 ist eine durchgängige zylindrische Aussparung 45 vorgesehen, die sich an einem Innenabsatz 46 in Richtung des Fluidwegs W verjüngt. In den Abschnitt der Aussparung 45, die den größeren Innendurchmesser aufweist, ist ein Entnahmerohr 47 eingesetzt, dessen Außenfläche an die Innenfläche der Aussparung 45 angrenzt.

Das Gehäuseteil 24c umgibt den unteren Teil der Entnahmeleitung 10a, 10b, der aus dem Gehäuseteil 24a herausragt. Das zylindrisch geformte Gehäuseteil 24c ist in die Aussparung des Gehäuseteils 24a eingeführt, wobei seine zylindrische Außenfläche an die zylindrische Innenfläche des die Aussparung des Gehäuseteils 24a umgebenden Randes grenzt. Der untere Abschnitt des Entnahmerohrs 47 ragt an dem Ende, an dem sich die Entnahmeöffnung 10a befindet, aus dem Gehäuseteil 24c. Eine in Richtung der Entnahmeöffnung 10a weisende Gehäusewand des Gehäuseteils 24c, die im wesentlichen senkrecht zur Symmetrieachse A verläuft, grenzt an die Außenfläche des Entnahmerohrs 47 und dichtet damit den vom Gehäuseteil 24c umschlossenen Hohlraum gegen die Umgebung ab. Der von dem Gehäuseteil 24c umschlossene Hohlraum, der das Entnahmerohr 47 umgibt, stellt Raum für PTC-Heizelemente 48a, 48b bereit, um die Entnahmeleitung 3 und die über dem Hohlraum angeordnete Leiterplatte 33 zu beheizen. In diesem Hohlraum können alternativ Heizdrähte oder Dickschichtheizungen angeordnet sein.

Für die Schaltung der Heizelemente 48a, 48b sind auf der Leiterplatte Metall-Oxid-Halbleiter-Feldeffekttransistoren (MOSFET) 49a, 49b vorgesehen. Um die Wärmeleitung der von den MOSFETs 49a, 49b abgegebenen Wärme in die Flüssigkeit 8 zu verbessern, sind diese in unmittelbarer Nähe der an die Flüssigkeit 8 grenzenden Gehäusewand des Gehäuseteils 24a angeordnet. Die Gehäusewand des Gehäuseteils 24a dient damit als Wärmebrücke, um die von den MOSFETs 49a, 49b abgegebene Wärme in die Flüssigkeit 8 zu leiten. Um die Wärmeleitung von den MOSFETs 49a, 49b in die Flüssigkeit oder zur Entnahmeleitung 3 weiter zu verbessern, können die MOSFETs 49a, 49b auch über einen Wärmeleiter, beispielsweise ein Aluminiumblech, mit der Gehäusewand des Gehäuseteils 24a oder der Entnahmeleitung 3 verbunden werden.

Für die Schaltung von Heizelementen 48a, 48b verschiedener Heizleistungen oder die Schaltung einer unterschiedlichen Anzahl von Heizelementen 48a, 48b kann entsprechend eine größere oder kleinere Anzahl von MOSFETs 49a, 49b verwendet werden. Wird beispielsweise Heizleistung der gezeigten Ausgestaltung verdoppelt, können statt der gezeigten zwei vier MOSFETs 49a, 49b auf der Leiterplatte 33 angeordnet werden.

Durch die Anordnung der Leiterplatte 33 unmittelbar an der Entnahmeleitung 3 wird die Übertragung der in der Steuerelektronik erzeugten Wärme auf die Entnahmeleitung 3 und die Flüssigkeit 8 im Fahrzeugtank 2 verstärkt. Eine nicht dargestellte Wärmebrücke zwischen Steuerelektronik und Entnahmeleitung 3 verbindet die Steuerelektronik wärmeleitend mit der Entnahmeleitung 3. Diese wärmeleitende Verbindung bietet den Vorteil, dass die in den auf der Leiterplatte 33 angeordneten elektrischen Bauelementen entstehende Wärme unmittelbar für die Beheizung der Entnahmeleitung 3 genutzt werden kann. Im eingebauten Zustand befindet sich das Gehäuseteil 24a zumindest teilweise unterhalb des Fluidspiegels S, so dass die von der Elektronik abgegebene Wärme auch unmittelbar an die Flüssigkeit 8 im Fahrzeugtank 1 abgegeben werden kann. Indem die Entnahmeleitung 3 und die Leiterplatte 33 in einem Gehäuse 24 mit Heizelementen kombiniert werden, können die Heizelemente außerdem die auf der Leiterplatte 33 angeordneten elektrischen Bauelemente beheizen.

Eine derartige Kombination von elektrischen Bauelementen, einer oder mehrerer Leitungen sowie von Heizelementen in einer Baugruppe kann alternativ auch an der Heizleitung 6 bzw. der Rücklaufleitung 16 vorgesehen werden.

Alternativ können auch Ein- und/oder Einbuchtungen in der Außenwand des Fahrzeugtanks 2 vorgesehen werden, in welche die Steuerelektronik und/oder außen liegenden Abschnitte des Leitungssystems und/oder die Pumpe 4 und/oder das Ventil 5a so eingelegt werden, dass die abgegebene Warme dieser Elemente zumindest teilweise von dem Fahrzeugtank 2 aufgenommen werden können. Alternativ oder zusätzlich zu den Einbuchtungen kann der Fahrzeugtank 2 an seiner Außenseite mit einer thermischen Isolierung beziehungsweise Wärmedämmung versehen werden, die Wärmeverluste an die Umgebung mindert und/oder Wärmeverluste der außerhalb des Fahrzeugtanks 2 liegenden Elemente zum Fahrzeugtank 2 leitet.

Die in Fig. 1 bis 4 gezeigten Heizelemente 12a, 12b, 13, 18a, 18b, 18c, 22 können von einer, hier nicht gezeigten, elektrischen Energiequelle, beispielsweise einer Batterie oder dem Generator des Fahrzeugs, betrieben werden. Sie können zum Beispiel als selbstregulierende PTC-Heizelemente ausgeführt sein.

Alternativ können die Heizelemente als Heizdrähte oder Dickschichtelemente ausgeführt sein. Um ein Überschreiten einer vorbestimmten Grenztemperatur zu verhindern, kann die Heizleistung begrenzt werden. In einer weiteren Ausgestaltung kann zur Regelung der Heizleistung ein Thermostat oder eine elektronische Regelung vorgesehen werden, welches das Überschreiten einer voreingestellten Temperatur in dem Heizelement oder in der an das Heizelement angrenzenden Flüssigkeit verhindert, indem die Heizleistung verringert oder die Heizelemente abgeschaltet werden.

## Patentansprüche

1. Tankentnahmesystem (1) für einen Fahrzeugtank (2), der mit einer zumindest teilweise gefrorenen Flüssigkeit (8) gefüllt ist, mit einem Heizsystem, das wenigstens ein elektrisches Heizelement (12a, 12b, 13, 18a, 18b, 18c, 22, 48a, 48b) als primäre Heizvorrichtung umfasst und mit einem Leitungssystem, das wenigstens eine Entnahmeleitung (3,19) mit einer im Fahrzeugtank (2) angeordneten Entnahmeöffnung (10a, 10b) aufweist, wobei ein sich um die Entnahmeöffnung (10a, 10b) erstreckendes Kaltstartvolumen (14a, 14b) der gefrorenen Flüssigkeit durch die primäre Heizvorrichtung abschmelzbar ist, **dadurch gekennzeichnet, dass** das Heizsystem eine mit einem Heizfluid gespeiste sekundäre Heizvorrichtung und das Leitungssystem wenigstens eine vom Heizfluid durchströmbare, in der Flüssigkeit im Fahrzeugtank (2) angeordnete Heizleitung (6) aufweist, und dass die Heizleitung (6) mit der Entnahmeleitung (3, 19) flüssigkeitsleitend verbunden und die abgeschmolzene Flüssigkeit durch die Entnahmeleitung (3, 19) der Heizleitung (6) als Heizfluid zuführbar ist.

2. Tankentnahmesystem (1) nach Anspruch 1, **dadurch gekennzeichnet, dass** die Heizleitung (6) eine Rücklaufleitung (16) umfasst, die eine im Fahrzeugtank (2) angeordnete Rücklauföffnung (11) aufweist, durch welche durch die Entnahmeleitung (3, 19) entnommene Flüssigkeit dem Fahrzeugtank rückführbar ist.

3. Tankentnahmesystem (1) nach Anspruch 1 oder 2, **dadurch gekennzeichnet, dass** die Heizleitung (6) mit einer Entnahmeleitung (3, 19) über die Flüssigkeit (8) im Fahrzeugtank (2) einen Flüssigkeitskreislauf bildet.

4. Tankentnahmesystem (1) nach Anspruch 1, **dadurch gekennzeichnet, dass** beide Enden der Heizleitung (6) flüssigkeitsleitend mit der Entnahmeleitung (3, 19) verbunden sind.

5. Tankentnahmesystem (1) nach Anspruch 1 oder 4, **dadurch gekennzeichnet, dass** die Heizleitung (6) mit einer Entnahmeleitung (3, 19) einen geschlossenen Kreislauf für das Heizfluid bildet.

6. Tankentnahmesystem (1) nach einem oder mehreren der Ansprüche 1 bis 5, **dadurch gekennzeichnet, dass** wenigstens eine mit der Entnahmeleitung (3, 19) verbundene, zwischen Entnahmeöffnung (10a, 10b) und Heizleitung (6) angeordnete Pumpe (4) vorgesehen ist.

7. Tankentnahmesystem (1) nach einem oder mehreren der Ansprüche 1 bis 6, **dadurch gekennzeichnet, dass** ein Ventil (5a) zwischen Entnahmeleitung (3, 19) und Heizleitung (6) angeordnet ist, das die Heizleitung (6) von der Entnahmeleitung (3, 19) abzweigt.

8. Tankentnahmesystem (1) nach einem oder mehreren der Ansprüche 1 bis 7, **dadurch gekennzeichnet, dass** die Pumpe (4) mit einer Pumpenbeheizung versehen ist.

9. Tankentnahmesystem (1) nach einem oder mehreren der Ansprüche 1 bis 8, **dadurch gekennzeichnet, dass** das Ventil (5a) mit einer Ventilbeheizung versehen ist.

10. Tankentnahmesystem (1) nach einem oder mehreren der Ansprüche 1 bis 9, **dadurch gekennzeichnet, dass** die Entnahmeleitung (3, 19) und/oder die Rücklaufleitung (11) und/oder die Heizleitung (6) beheizbar ausgestaltet sind.

11. Tankentnahmesystem (1) nach einem oder mehreren der Ansprüche 1 bis 10, **dadurch gekennzeichnet, dass** die Pumpe (4) und/oder das Ventil (5a) im Fahrzeugtank (2) angeordnet und über eine Wärmebrücke mit der Entnahmeleitung (3, 19) verbunden sind.

12. Tankentnahmesystem (1) nach einem oder mehreren der Ansprüche 1 bis 11, **dadurch gekennzeichnet, dass** die Pumpe (4) und/oder das Ventil (5a) im Fahrzeugtank (2) angeordnet und über eine Wärmebrücke mit der Heizleitung (3, 19) verbunden sind.

13. Tankentnahmesystem (1) nach einem oder mehreren der Ansprüche 1 bis 12, **dadurch gekennzeichnet, dass** das Tankentnahmesystem (1) eine Steuerelektronik (33, 49a, 49b) zur Steuerung des Tankentnahmesystems (1) umfasst, wobei die Steuerelektronik (33, 49a, 49b) im Fahrzeugtank (2) angeordnet und über eine Wärmebrücke mit der Entnahmeleitung (3, 19) und/oder der Heizleitung (6) und/oder der Flüssigkeit (8) im Fahrzeugtank (2) verbunden ist.

14. Tankentnahmesystem (1) nach einem oder mehreren der Ansprüche 1 bis 13, **dadurch gekennzeichnet, dass** das Tankentnahmesystem (1) eine Entnahmeeinheit (23) mit einem Gehäuse (24a, 24b, 24c) aufweist, die durch eine Montageöffnung (7d) in den Fahrzeugtank (2) einteilig einsetzbar und zumindest abschnittsweise in die im Fahrzeugtank (2) enthaltene Flüssigkeit (8) eintauchbar ausgestaltet ist, wobei die Entnahmeeinheit (23) einen eine Entnahmeöffnung (10a, 10b) umfassenden Abschnitt der Entnahmeleitung (3, 19), elektrische Heizelemente (48a, 48b) und die Steuerelektronik (33, 49a, 49b) umfasst.

15. Tankentnahmesystem (1) nach einem oder mehreren der Ansprüche 1 bis 14, **dadurch gekennzeichnet, dass** im Fahrzeugtank (2) wenigstens eine beweglich antreibbare Verwirbelungsvorrichtung (21) vorgesehen ist, welche innerhalb des Fahrzeugtanks (2), insbesondere im Bereich des Bodens des Fahrzeugtanks (2), angeordnet ist.

16. Tankentnahmesystem (1) nach einem oder mehreren der Ansprüche 1 bis 15, **dadurch gekennzeichnet, dass** die Verwirbelungsvorrichtung (21) im Kaltstartvolumen (14a, 14b) und/oder im Bereich der Rücklauföffnung (17) der Heizleitung (6) angeordnet ist.

17. Verfahren zur Entnahme einer zunächst gefrorenen Flüssigkeit (8) aus einem Fahrzeugtank (2), bei dem die Flüssigkeit im Bereich um wenigstens eine Entnahmeöffnung (10a, 10b) abgeschmolzen und die abgeschmolzene Flüssigkeit durch die Entnahmeöffnung (10a, 10b) aus dem Fahrzeugtank geleitet wird, **dadurch gekennzeichnet, dass** wenigstens ein Teil der entnommenen Flüssigkeit über eine Heizleitung (6) durch den Fahrzeugtank (2) geführt und/oder dem Fahrzeugtank (2) zugeführt und damit der Fahrzeugtank (2) beheizt wird.

18. Verfahren nach Anspruch 17, **dadurch gekennzeichnet, dass** wenigstens ein Teil der entnommenen Flüssigkeit dem Fahrzeugtank (2) wieder zugeführt wird.

19. Verfahren nach Anspruch 17 oder 18, **dadurch gekennzeichnet, dass** die durch die Heizleitung (6) dem Fahrzeugtank (2) zugeführte Flüssigkeit wenigstens teilweise in einem die Entnahme- (3, 19) und Heizleitung (6) umfassenden Kreislauf zirkuliert.

20. Verfahren nach einem oder mehreren der Ansprüche 17 bis 19, **dadurch gekennzeichnet, dass** die Abwärme der Pumpe (4) der in die Heizleitung (6) geleiteten Flüssigkeit zugeführt wird.

21. Verfahren nach einem oder mehreren der Ansprüche 17 bis 20, **dadurch gekennzeichnet, dass** die Heizleitung (6) beheizt wird.

22. Verfahren nach einem oder mehreren der Ansprüche 17 bis 21, **dadurch gekennzeichnet, dass** die abgeschmolzene Flüssigkeit im Fahrzeugtank (2) verwirbelt wird.

23. Verfahren nach einem oder mehreren der Ansprüche 17 bis 22, **dadurch gekennzeichnet, dass** in Abhängigkeit von der Temperatur der abgeschmolzenen Flüssigkeit zusätzliche Heizungen (12a, 12b, 13, 18a, 18b, 18c, 22) zu- oder abgeschaltet werden.
